# EUROPEAN PATENT APPLICATION

(11) **EP 3 708 338 A1**
(43) Date of publication of application: **16.09.2020**
(21) Application number: 19162198.6
(22) Date of filing: 12.03.2019
(51) Int. Cl.: B29C 64/153, B29C 64/35, B33Y 30/00

(54) **DETERMINATION DEVICE FOR DETERMINING AT LEAST ONE PARAMETER OF A SURFACE**

(71) Applicant: Concept Laser GmbH, 96215 Lichtenfels (DE)
(72) Inventor: Gärber, Bertram, 96465 Neustadt (DE)
(74) Representative: Hafner & Kohl PartmbB

(57) **Abstract**

Determination device (6) for determining at least one surface parameter of an apparatus (1) for additively manufacturing three-dimensional objects (2) by means of successive layerwise selective consolidation of layers of a build material (3) which can be consolidated by means of an energy source, wherein the apparatus (1) comprises a chamber (5), in particular a process chamber in which the additive manufacturing process is performed, wherein the determination device (6) comprises at least one wave generator (7) adapted to generate at least one wave (8), in particular an acoustic wave, and guide the wave (8) across at least one surface (9) delimiting the chamber (5) and/or across at least one surface (9) of a component of the apparatus (1), wherein the determination device (6) is adapted to determine at least one surface parameter of the surface (9) based on at least one determined wave parameter of the wave (8, 8').

## Description

The invention relates to a determination device for determining at least one surface parameter of an apparatus for additively manufacturing three-dimensional objects by means of successive layerwise selective consolidation of layers of a build material which can be consolidated by means of an energy source, wherein the apparatus comprises a chamber, in particular a process chamber in which the additive manufacturing process is performed.

Apparatuses for additively manufacturing three-dimensional objects and determination devices for determining surface parameters of a surface of the apparatus are generally known from prior art. For example, it is known that windows in a wall of the process chamber have to be kept clean in order to allow for radiation to pass through the window without significant loss of intensity of the radiation. Thus, it is known to clean or replace the window, e.g. in defined time intervals or based on eye inspection. Thus, a quantitative determination of the amount of residues or the degree of contamination of the surface is not possible.

It is an object of the present invention to provide an improved determination device for determining at least one surface parameter of an apparatus for additively manufacturing three-dimensional objects, wherein in particular a quantitative determination of a degree of contamination of the surface is possible.

The object is inventively achieved by a determination device according to claim 1. Advantageous embodiments of the invention are subject to the dependent claims.

The determination device described herein is a determination device for an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the determination device described herein is a determination device for an apparatus for additively manufacturing three-dimensional objects. The determination device can inventively be used to determine a surface parameter of the chamber of the apparatus. Thus, it is particularly possible to express or quantify a condition of the surface via the surface parameter, for example whether or not residues are adhered to the surface. Further, it is possible to determine the degree of contamination, e.g. to decide whether or not a cleaning process or replacement process of that part of the surface or the surface itself is necessary.

The invention is based on the idea that the determination device comprises at least one wave generator adapted to generate at least one wave, in particular an acoustic wave, and guide the wave across at least one surface delimiting the chamber and/or across at least one surface of a component of the apparatus, wherein the determination device is adapted to determine at least one surface parameter of the surface based on at least one determined wave parameter of the wave. Thus, the inventive determination device comprises a wave generator via which at least one wave, in particular an acoustic wave, can be generated. The wave can be guided across the at least one surface to determine the surface parameter, wherein the determination of the surface parameter is performed based on at least one determined wave parameter of the wave. The determined wave parameter may, inter alia, comprise or relate to the amplitude and/or phase and/or velocity of the wave, e.g. in comparison with the initial wave or a reference wave.

In other words, the wave generator of the determination device is used to generate the wave, which wave is guided across the surface that delimits the chamber of the apparatus, wherein after the propagation of the wave across the surface the wave parameter that relates to the wave can be determined. Based on the determined wave parameter a determination of the surface parameter is possible, in particular the determined wave parameter in comparison with a reference wave parameter. The wave can therefore, be referred to as "surface wave" or "surface acoustic wave" (SAW), as the wave travels across the surface of the chamber or of the component of the apparatus. In general, as wave generator any arbitrary unit can be used that is adapted to generate a corresponding wave. For example, an interdigital transducer may be used that can act as sender and receiver. The signal generator may, inter alia, comprise at least one piezo element that can be used to generate a wave by applying a corresponding voltage.

The term "chamber" may relate to any arbitrary chamber of an additive manufacturing apparatus in which a pollution or a contamination of surfaces is possible, e.g. a contamination with residues generated during the additive manufacturing process, such as soot, smoke or smolder or non-consolidated build material particles or partially consolidated build material particle conglomerates. In particular, the term chamber may relate to the process chamber, i.e. the chamber in which the additive manufacturing process is performed. For example a chamber in which a powder bed is arranged during the additive manufacturing process, i.e. a plane in which build material is layerwise applied and successively layerwise selectively consolidated to form the three-dimensional object. The term "component" may relate to an arbitrary functional unit of the apparatus, e.g. a surface of an application unit or an irradiation unit, such as the surface of a mirror of a scanning unit of the irradiation unit.

By determining the surface parameter of the at least one surface, it is possible to derive the surface parameter of the surface contactless, wherein quantitative information about the degree of contamination of the surface can be derived or obtained. As waves, in particular acoustic waves, are used to determine the surface parameter, an interference with radiation used to consolidate the build material in the additive manufacturing process is avoided. Hence, the determination process may be performed during the additive manufacturing process without the risk of interfering with the irradiation of build material.

Further, it is not necessary to determine the intensity of the energy beam or other types of radiation used to consolidate the build material before propagation and after propagation through an optical window, for instance. It is further not necessary to provide optical determination means, such as cameras or optical sensors for determining the surface parameter of the surface of the chamber, which optical determination means may themselves become contaminated, wherein the determination process can be corrupted.

The surface of the chamber, in particular of the process chamber, may be an optical surface, for example a window in the process chamber. Thus, it is particularly possible that the window of the process chamber that delimits the process chamber, e.g. through which radiation can be guided to consolidate the build material, can be monitored via the determination device. Hence, the determination device may generate a wave which can be guided across the optical surface, in particular across the window of the chamber, to determine the surface parameter of the optical surface, e.g. the degree of contamination. Thus, it is possible to determine whether the degree of contamination has a significant influence on the additive manufacturing process, in particular the irradiation process step of the additive manufacturing process and whether a replacement of the optical surface, in particular the window, or a cleaning process for cleaning the optical surface is necessary. Additionally or alternatively, the wave may be guided across at least one surface of a component of the apparatus for determining the wave parameter of the wave that propagates across the surface. Thus, a degree of contamination of the component of the apparatus, e.g. the irradiation unit, especially an optical mirror of a scanning unit, can be derived.

The determination device can comprise a receiving unit which may be adapted to receive the wave after propagation across the surface. The receiving unit therefore, can receive the wave after the wave propagated across the surface, wherein due to different properties of the surface, e.g. a contamination degree, damages and the like, the wave parameter of the wave is changed. In other words, a wave with initial wave properties is generated and guided across the surface, wherein the wave properties change dependent on the surface parameter or change dependent on the condition of the surface, respectively. By determining the wave parameter of the wave that crossed the surface, it is possible to determine the surface parameter based on the wave parameter. The receiving unit may be integrated in the wave generator or the wave generator may be used as receiving unit.

For example, the receiving unit may be adapted to receive the wave reflected at a portion of the surface, in particular an edge of the surface. Besides, it is also possible to receive the wave directly after the wave crossed the surface. By arranging the receiving unit in the direction in which the reflected wave propagates, it is possible to guide the wave two times across the surface, namely in a first direction in which it is guided across the surface and in a second direction, in particular the opposite direction, in which the reflected wave travels (back) across the surface. Hence, the wave generator may be arranged along one edge of the (optical) surface in that the generated wave may travel across the surface in the first direction and can be reflected at the opposing edge of the surface, wherein the reflected wave may travel the same way back in the opposite direction towards the receiving unit that is arranged at the same edge of the (optical) surface.

The surface parameter may be, comprise or may relate to a physical and/or mechanical parameter. In general, any condition of the surface that influences the wave that propagates across the surface and thereby affects the wave parameter of the wave can be determined or described by the surface parameter. In particular, physical and/or mechanical parameters can be described via the surface parameter. Inter alia, the surface parameter may relate to a temperature of the surface and/or a temperature gradient of the surface and/or a tension of the surface and/or a damage of the surface and/or residues adhered to the surface. As described before, these mechanical and/or physical characteristics of the surface influence the wave that propagates across the surface and change the wave parameter. For example, dependent on a temperature or a temperature gradient of the surface, the wave parameter of the wave propagating across the surface is changed, wherein different temperatures or temperature gradients cause different changes of the wave parameter.

In other words, it is possible to determine the condition of the surface via the surface parameter, since dependent on the condition of the surface the wave parameter of the wave propagating across the surface is changed / affected. Therefore, the wave parameter changes dependent on the actual condition of the surface. For example, a tension of the surface and/or a damage of the surface affects the wave and changes the wave parameter deviant from the wave parameter of a wave propagating across an undamaged (optical) surface or a (optical) surface without tension. Additionally, it is possible that residues that are adhered to the (optical) surface influence the wave that propagates across the surface and therefore, change the wave parameter of the wave deviant from a surface to which no residues are adhered. Thus, it is possible to determine whether residues are adhered to the surface dependent on the wave parameter of the wave that propagates across the surface.

The surface parameter may particularly be or relate to a thickness of a layer of residues or a type of residues adhered to at least one part of the surface. Advantageously, it distinguishing between different types of residues determining the thickness of the layer of residues is also possible, e.g. determining the amount of residues adhered to the surface and the degree of contamination. For example, it is possible to distinguish between the explicit types of residues, such as fingerprints, spatters, dust or soot deposited or adhered to the (optical) surface. It is further possible to determine whether a replacement or a cleaning process of the surface is necessary by determining the thickness of the layer or the type of residue. Hence, a determination can be performed, whether a cleaning process or a replacement process is necessary dependent on what type of residues are adhered to the surface or how thick the layer of residues is on the surface. Inter alia, the effect on the additive manufacturing process caused by the residues adhered to the surface, such as the effect on radiation that propagates through the window in the process chamber, especially the part of radiation absorbed by the residues, can be derived.

The determination device may particularly be adapted to initiate and/or control a replacement process or a cleaning process of at least one part of the surface based on the determined surface parameter. As described before, it is possible to determine the degree of contamination of the surface based on the determination of the wave parameter of the wave that propagated across the surface. For example, it is possible to initiate and/or control the replacement process or the cleaning process based on the surface parameter, as the surface parameter may relate to a contamination degree, e.g. the thickness of a layer of residues. With an increasing thickness of the layer of residues that is deposited on or adhered to the surface, the ratio of intensity that is absorbed by the layer of residues also increases. Therefore, a threshold value may be defined above which a cleaning process or a replacement process may be performed to remove the residues adhered to the surface.

Besides, the type of residues can be taken into calculation, especially by distinguishing between fingerprints, spatters, dust or soot. A fingerprint, for instance, may absorb or scatter a significant amount of radiation can cause the determination device to initiate a replacement process or a cleaning process, whereas a comparatively small amount of dust, does not absorb or scatter a significant amount of radiation and does not (immediately) require a replacement or a cleaning process to be performed. Of course, the initiation or control of the replacement process or the cleaning process can be performed based on any arbitrary (part of the) surface parameter, in particular any physical and/or mechanical parameter. Advantageously, it is not necessary to perform a cleaning process or a replacement process of the surface on basis of a defined time interval or on eye inspection, but it is possible to quantitatively determine the surface parameter based on the wave parameter of the wave that propagated across the surface.

Additionally, it is possible that the determination device may be adapted to control at least one process parameter based on the determined surface parameter. Hence, the determined surface parameter can form the basis for a control of the additive manufacturing process. Thus, a variety of parameters can be adjusted dependent on the determined surface parameter, e.g. dependent on the condition of the surface, particularly whether residues are adhered to the surface or whether a damage of the surface is detected.

Inter alia, the process parameter may be or may relate to an irradiation parameter, in particular an intensity of the energy source and/or a focal position of the energy source. Thus, dependent on the surface parameter the energy source can be controlled, in particular an energy beam, for example the intensity of the energy beam and/or the focal position of the energy beam. As described before, multiple surface parameters or a surface parameter comprising multiple parameters may be determined, such as the temperature of the surface, wherein dependent on the temperature temperature-induced errors can occur, e.g. focal shifts. The corresponding irradiation parameter can be controlled, such as the focal position, to compensate thermally induced errors. Besides, it is also possible to compensate the ratio of the energy source or energy beam that is absorbed in a layer of residues adhered to the surface by correspondingly controlling the intensity of the energy source.

The process parameter may further be or relate to a streaming parameter, in particular a streaming velocity and/or a streaming direction, of a gas stream. By determining the surface parameter of the surface of the chamber, it is possible to derive whether residues are present on the surface or whether residues are adhered to the surface. Thus, it is possible to correspondingly control a streaming parameter of the gas stream to reduce the amount of residues depositing on the surface. Further, it is possible to take the temperature or temperature gradient of the surface into calculation and correspondingly control the streaming parameter. For example, if a defined temperature value is exceeded, the streaming velocity of the gas stream streaming alongside or onto the surface can correspondingly be controlled. The same applies for a streaming direction.

According to another embodiment of the inventive determination device, the determination device may be adapted to locally resolve the surface parameter, in particular based on a time of flight of the wave and/or at least one reflected part of the way. Therefore, it is advantageously possible that the affected region of the surface can be determined, e.g. the position of residues or damages on the surface. The locally resolved determination of the surface parameter can, for example, be performed based on the time-of-flight of the wave. In other words, the time-of-flight of the wave can be recorded and therefore, the region in which the wave is reflected can be derived for determining the position of damage in the surface or residues adhered to the surface, for instance.

The determination device may comprise at least two wave generators and corresponding receiving units, particularly in perpendicular arrangement. Hence, it is possible to generate and guide at least two waves across the surface allowing for an improved local resolution of the locations of the residues or damages in the surface. For example, two wave generators may be arranged to generate and guide waves perpendicularly across the (optical) surface, wherein for example, one wave travels in x- direction and one wave travels in y- direction across the surface. Dependent on the time-of-flight of the waves or parts of the reflected waves, the positions of the damages or residues and other surface parameters can be determined, as described before. Thus, it is particularly possible to generate a spatially resolved map of the surface parameter, e.g. indicating the positions of residues on the surface.

It is also possible to take the positions of the damages or residues on the surface into calculation, wherein it is possible to postpone a replacement process or a cleaning process in case residues or damages are merely affecting regions of the surface that are not critical for process quality and/or object quality, whereas if residues or damages are present in regions of the surface that are critical for the process quality and/or the object quality, a replacement process or a cleaning process can be initiated and/or controlled accordingly.

Besides, the invention relates to an apparatus for additively manufacturing three-dimensional objects by means of successive layerwise selective consolidation of layers of a build material which can be consolidated by means of an energy source, wherein the apparatus comprises a chamber, in particular a process chamber in which the additive manufacturing process is performed, wherein a determination device is provided, in particular an inventive determination device, as described before, which determination device comprises at least one wave generator adapted to generate at least one wave, in particular an acoustic wave, and guide the wave across at least one surface of the chamber, wherein the determination device is adapted to determine at least one surface parameter of the surface based on at least one determined wave parameter of the wave.

Further, the invention relates to a method for operating an apparatus for additively manufacturing three-dimensional objects by means of successive layerwise selective consolidation of layers of a build material which can be consolidated by means of an energy source, in particular an inventive apparatus, as described before, wherein the apparatus comprises a chamber, in particular a process chamber in which the additive manufacturing process is performed, wherein the following steps are performed:
- generating at least one wave, in particular an acoustic wave, and
- guiding the wave across at least one surface of the process chamber,
- determining at least one surface parameter of the surface based on at least one determined wave parameter of the wave.

Self-evidently, all details, features and advantages described with respect to the inventive determination device are fully transferable to the inventive apparatus and the inventive method.

Exemplary embodiments of the invention are described with reference to the Fig. The Fig. are schematic diagrams, wherein
- Fig. 1: shows an apparatus for additively manufacturing three-dimensional objects;
- Fig. 2: shows the determination device of the apparatus of Fig. 1 according to a first embodiment; and
- Fig. 3: shows the determination device of the apparatus of Fig. 1 according to a second embodiment.

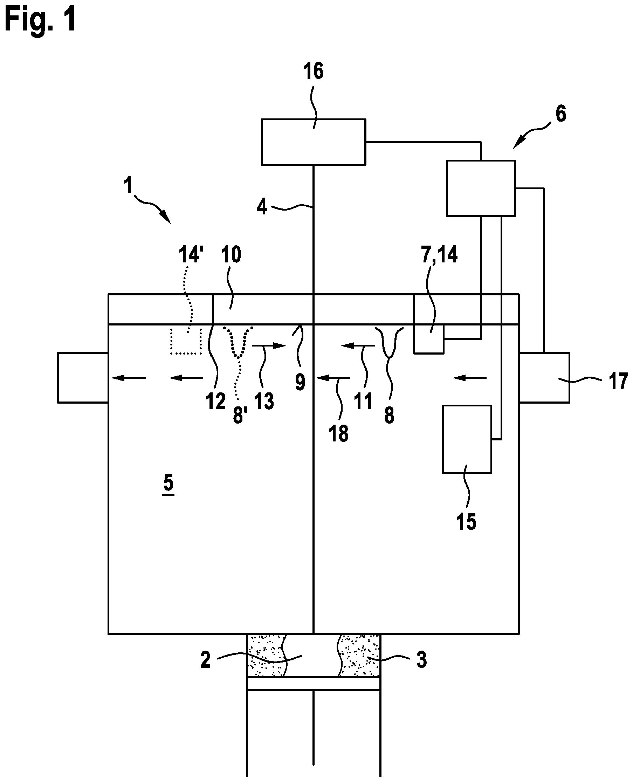

Fig. 1 shows an apparatus 1 for additively manufacturing three-dimensional objects 2 by means of successive layerwise selective consolidation of layers of a build material 3 which can be consolidated by means of an energy source. In this exemplary embodiment an energy beam 4 is used to selectively consolidate the build material 3 to build the object 2. The apparatus 1 comprises a chamber 5, in this exemplary embodiment a process chamber, in which the additive manufacturing process is performed. Thus, the chamber 5 delimits a volume in which the consolidation process of the build material 3 is performed.

The apparatus 1 further comprises a determination device 6 with a wave generator 7 that is adapted to generate waves 8, in particular acoustic waves. The waves 8 can be guided via the wave generator 7 or a corresponding wave guiding means (not shown) across a surface 9. In this exemplary embodiment, the surface 9 is an optical surface of the apparatus 1, in particular an optical surface of a window 10 in the chamber 5, which optical surface faces the chamber 5. The surface 9 may also be a surface of a component of the apparatus 1, e.g. a surface of an irradiation unit, particularly a surface of a mirror of a scanning unit. As described before, the wave generator 7 may generate the wave 8 and guide the wave 8 in that the wave 8 propagates across the surface 9, as indicated via arrow 11. The wave 8 is reflected at an edge 12 of the surface 9, in particular an edge of the window 10. Hence, the wave 8 is reflected as a wave 8', and propagates across the surface 9 in the opposite direction, as indicated via arrow 13.

Subsequently, the wave generator 7 may comprise a receiving unit 14 that is adapted to receive the reflected wave 8'. Alternatively, it is also possible to use a receiving unit 14' arranged on the opposite side of the window 10 with respect to the position of the wave generator 7. The received wave 8' can be used to determine the wave parameter, wherein it is possible to compare the wave parameter of the reflected wave 8' with the wave parameter of the generated wave 8. Dependent on the condition of the surface 9, the wave parameter of the wave 8 is changed during the travel across the surface 9. Thus, a surface parameter of the surface 9 can be determined based on the difference between the wave parameters of the waves 8, 8'. Besides, an initial wave parameter can be defined, e.g. for a wave 8 that propagates across an ideal surface 9, wherein the determined wave parameter can also be compared with the wave parameter of the ideal wave.

Based on the determined surface parameter of the surface 9, the determination device 6 is adapted to initiate and/or control a replacement process or a cleaning process of the window 10, e.g. via a cleaning unit 15. It is also possible that the determination device 6 can control at least one process parameter of the additive manufacturing process, e.g. an irradiation parameter of an irradiation unit 16 used to generate and/or guide the energy beam 4. Further, a stream generating device 17 which is adapted to generate a gas stream 18 can be controlled via the determination device 6 or controlled based on the surface parameter of the surface 9 determined via the determination device 6. Thus, at least one streaming parameter of the gas stream 18 that is generated by the stream generating device 17 can be controlled. For example, a streaming velocity and/or a streaming direction of the gas stream 18 can be controlled dependent on the determined surface parameter of the surface 9.

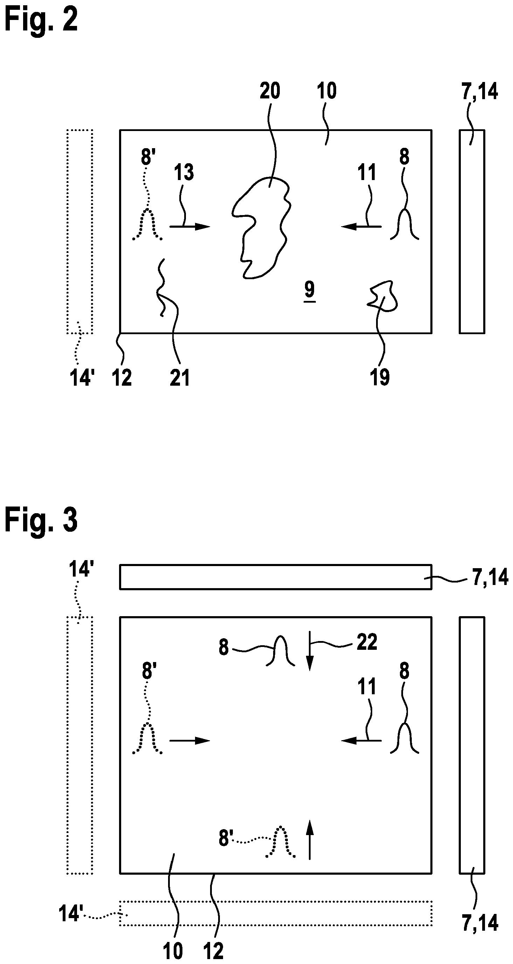

The surface parameter may be or may comprise or may relate to a physical and/or mechanical parameter. As depicted in Fig. 2, which shows a view onto the optical surface 9 of the window 10 from inside the chamber 5, different types of residues and/or damages on or in the surface 9 can be determined via the wave 8. Exemplary residues are depicted, wherein a fingerprint in a remote location (with respect to a center of the surface 9) on the surface 9 is indicated by reference sign 19 and a residue layer, e.g. soot generated in the additive manufacturing process due to the irradiation of build material 3 is indicated by reference sign 20. Further, a crack is indicated with reference sign 21. Of course, the depicted residues and/or damages in the surface 9 or on the surface 9 are merely exemplary and an arbitrary combination of residues and/or damages or other types of residues and/or damages can occur during an additive manufacturing process. In particular, each of the residue examples or damage examples can occur individually.

Thus, dependent on the change of the wave parameter of the generated wave 8 in comparison to the received wave 8' it is possible to determine the presence of residues 19, 20 or damage 21 in the surface 9 or on the surface 9. Further, it is possible to determine the time-of-flight of the wave 8, 8' and thereby, locally resolve the position of the residues 19, 20 or the damage 21. In particular, it is possible to not only determine the time-of-flight of the entire waves 8, 8' but also the time-of-flight of a sub-wave that is reflected at the damage 21 or the residues 19,20. Hence, a time difference can be measured between the detection of the reflected wave 8' and the reflected sub-wave. Thus, the position of the defect, e.g. the damage 21 or the residues 19, 20, can be determined.

As different types of residues and different types of damages affect the wave 8, 8' differently, it is possible to determine the surface parameter of the surface 9 based on the wave parameter or the change of the wave parameter of the wave 8, 8'. In other words, it is possible to derive based on the determined wave parameter whether or not residues 19, 20 are present on the surface 9 and whether damage 21, such as a crack, is present in the surface 9 of the window 10.

Further, based on the wave parameter, which may also be deemed a wave signal, i.e. the wave 8, 8', it is possible to distinguish between different types of residues, such as fingerprints, soot, spatters, dust or the like and further determine the thickness of the layer of the residues, such as the thickness of the layer of soot or nonconsolidated build material adhered to the surface 9. Additionally, a temperature or a temperature gradient or a mechanical tension of the surface 9 can be determined and at least one process parameter of the additive manufacturing process performed on the apparatus 1 can be controlled accordingly. For example, as described before, an irradiation parameter of the irradiation unit 16 can be adjusted or the gas stream 18 can be controlled by adjusting a streaming parameter of the stream generating device 17.

As described before, the signal generator 7 can itself be used as receiving unit or a separate receiving unit 14 can be used. It is also possible to use a receiving unit 14' that is arranged on the opposite side of the window 10 with respect to the position of the signal generator 7. Of course, a combination of a receiving unit 14 arranged on the side of the signal generator 7 or integrated in the signal generator 7 and a separate receiving unit 14' can also be used. Further, a plurality of signal generators 7 and/or receiving units 14, 14' can be provided on each side of the surface 9, in particular the window 10.

As depicted in Fig. 3, two signal generators 7 and two receiving units 14, 14' are provided, wherein the signal generators 7 are adapted to generate waves 8 and guide the waves 8 across the surface 9 of the window 10. In this exemplary embodiment, the waves 8 generated via the different signal generators 7 propagate along different, in particular perpendicular, directions as indicated via arrows 11, 22. Thus, it is possible to locally resolve the positions of damages 21 or residues 19, 20 present in or on the surface 9 of the window 10, wherein in particular a map can be generated spatially resolving the individual positions. Further, it is possible to take the positions of the individual residues 19, 20 or damages 21 into calculation and derive whether the residues 19, 20 or damages 21 are arranged in critical positions or whether the residues 19, 20 or damages 21 do not significantly affect the additive manufacturing process, for example by residues 19, 20 or damages 21 being arranged in positions of the surface 9 not critical for an irradiation process, e.g. corners of the window 10.

Of course, the inventive method may be performed on the apparatus 1, particularly using the inventive determination device 6.

## Claims

1. Determination device (6) for determining at least one surface parameter of an apparatus (1) for additively manufacturing three-dimensional objects (2) by means of successive layerwise selective consolidation of layers of a build material (3) which can be consolidated by means of an energy source, wherein the apparatus (1) comprises a chamber (5), in particular a process chamber in which the additive manufacturing process is performed, **characterized in that** the determination device (6) comprises at least one wave generator (7) adapted to generate at least one wave (8), in particular an acoustic wave, and guide the wave (8) across at least one surface (9) delimiting the chamber (5) and/or across at least one surface (9) of a component of the apparatus (1), wherein the determination device (6) is adapted to determine at least one surface parameter of the surface (9) based on at least one determined wave parameter of the wave (8, 8').

2. Determination device according to claim 1, **characterized in that** the surface (9) is an optical surface (9), in particular a window (10) in the process chamber, or a surface (9) of a component of the apparatus (1).

3. Determination device according to claim 1 or 2, **characterized in that** the determination device (6) comprises a receiving unit (14, 14') that is adapted to receive the wave (8, 8') after propagation across the surface (9).

4. Determination device according to claim 3, **characterized in that** the receiving unit (14, 14') is adapted to receive the wave (8, 8') reflected at a portion of the surface (9), in particular an edge (12) of the surface (9).

5. Determination device according to one of the preceding claims, **characterized in that** the surface parameter is or comprises or relate to a physical and/or mechanical parameter.

6. Determination device according to claim 5, **characterized in that** the surface parameter is or relates to a temperature of the surface (9) and/or a temperature gradient of the surface (9) and/or a tension of the surface (9) and/or a damage of the surface (9) and/or residues (19, 20) adhered to the surface (9).

7. Determination device according to one of the preceding claims, **characterized in that** the surface parameter is or relates to a thickness of a layer of residues (19, 20) or a type of residues (19, 20) adhered to at least one part of the surface (9).

8. Determination device according to one of the preceding claims, **characterized in that** the determination device (6) is adapted to initiate and/or control a replacement or a cleaning process of at least one part of the surface (9) based on the determined surface parameter.

9. Determination device according to one of the preceding claims, **characterized in that** the determination device (6) is adapted to control at least one process parameter based on the determined surface parameter.

10. Determination device according to one of the preceding claims, **characterized in that** the process parameter is or relates to an irradiation parameter, in particular an intensity of the energy source and/or a focal position of the energy source.

11. Determination device according to one of the preceding claims, **characterized in that** the process parameter is or relates to a streaming parameter, in particular a streaming velocity and/or a streaming direction, of a gas stream (18).

12. Determination device according to one of the preceding claims, **characterized in that** the determination device (6) is adapted to locally resolve the surface parameter, in particular based on a time of flight of the wave (8, 8') and/or at least one reflected part of the wave (8, 8').

13. Determination device according to one of the preceding claims, **characterized in that** the determination device (6) comprises at least two wave generators (7) and receiving units (14, 14'), particularly in perpendicular arrangement.

14. Apparatus (1) for additively manufacturing three-dimensional objects (2) by means of successive layerwise selective consolidation of layers of a build material (3) which can be consolidated by means of an energy source, wherein the apparatus (1) comprises a chamber (5), in particular a process chamber in which the additive manufacturing process is performed, **characterized by** a determination device, in particular a determination device (6) according to one of the preceding claims, which determination device (6) comprises at least one wave generator (7) adapted to generate at least one wave (8), in particular an acoustic wave, and guide the wave (8) across at least one surface (9) of the chamber (5) and/or across at least one surface (9) of a component of the apparatus (1), wherein the determination device (6) is adapted to determine at least one surface parameter of the surface (9) based on at least one determined wave parameter of the wave (8, 8').

15. Method for operating an apparatus (1) for additively manufacturing three-dimensional objects (2) by means of successive layerwise selective consolidation of layers of a build material (3) which can be consolidated by means of an energy source, wherein the apparatus (1) comprises a chamber (5), in particular a process chamber in which the additive manufacturing process is performed, in particular an apparatus (1) according to claim 14, **characterized by**
- generating at least one wave (8), in particular an acoustic wave, and
- guiding the wave (8) across at least one surface (9) of the chamber (5) and/or across at least one surface (9) of a component of the apparatus (1),
- determining at least one surface parameter of the surface (9) based on at least one determined wave parameter of the wave (8, 8').
